# EUROPÄISCHE PATENTSCHRIFT

(11) **EP 1 523 403 B1**
(45) Veröffentlichungstag und Bekanntmachung des Hinweises auf die Patenterteilung: **24.09.2014**
(21) Anmeldenummer: 03730036.5
(22) Anmeldetag: 14.05.2003
(51) Int. Cl.: B29C 47/40, B29C 47/60, B29B 7/48

(54) **EXTRUDER**
EXTRUDER
EXTRUDEUSE

(30) Priorität: 22.07.2002 DE 10233213
(43) Veröffentlichungstag der Anmeldung: 20.04.2005
(73) Patentinhaber: Blach Verwaltungs GmbH & Co. KG, 74348 Lauffen (DE)
(72) Erfinder: BLACH, Josef, A., 74348 Lauffen (DE)
(74) Vertreter: vP-IP von Puttkamer Berngruber Loth Spuhler
(86) Internationale Anmeldenummer: PCT/EP2003/005074
(87) Internationale Veröffentlichungsnummer: WO 2004/009326

(56) Entgegenhaltungen:
- EP-A- 1 002 633
- DE-A- 2 934 297
- US-A- 2 676 355
- PATENT ABSTRACTS OF JAPAN vol. 014, no. 235 (M-0975), 18. Mai 1990 (1990-05-18) & JP 02 062222 A (MITSUBISHI HEAVY IND LTD), 2. März 1990 (1990-03-02)

## Beschreibung

Die Erfindung bezieht sich auf einen Extruder zum kontinuierlichen Bearbeiten und/oder Verarbeiten von fließfähigen Stoffen nach dem Oberbegriff des Anspruches 1.

Zum kontinuierlichen Bearbeiten, also insbesondere Mischen und Kneten von fließfähigen, also flüssigen, zähflüssigen, plastischen oder teilchenförmigen Stoffen werden in Zweiwellenextrudern sogenannte Knetblöcke verwendet, die aus Wendeltreppenartig versetzt angeordneten Kurvenscheiben bestehen (vgl. DE-C-813154). Dabei wird der Stoff durch einen schmalen Keilspalt zwischen den Kurvenscheiben und dem Extrudergehäuse hindurch gepresst, was eine unterschiedliche Erwärmung und partielle Überbeanspruchung durch Scherung des Stoffes zur Folge haben kann, ferner einen örtlich überdurchschnittlichen Verschleiß verursacht.
Aus DE-A-2 003 593 und JP 02 062222 ist bereits ein Zweiwellenextruder nach dem Oberbegriff des Anspruches 1 bekannt, wobei in DE-A-2 003 593 der Schneckengang der einen Schnecke durch einen Dichtungssteg verschlossen wird, während die andere Schnecke an der sich bei Drehung an diesem Dichtungssteg vorbei bewegenden Stelle im Schneckenkamm eine Ausnehmung aufweist. Auch damit wird das im Schneckengang der Schnecke mit dem Dichtungssteg abgesperrte Material einer hohen Beanspruchung ausgesetzt, während die Schnecke mit der Ausnehmung nur einen geringen Beitrag zur Bearbeitung des Stoffes leistet.

JP 02 062222 offenbart einen Doppelschneckenextruder mit Ringabschnitten die in Bezug auf einen vergrößerten Zylinderabschnitt axial verstellbar sind um hohen Beanspruchungen im Material zu vermeiden.

Aufgabe der Erfindung ist es, die Antriebsenergie des Extruders optimal in eine gleichmäßige Bearbeitung und Behandlung des Stoffes umzusetzen.

Dies wird erfindungsgemäß mit dem in Anspruch 1 gekennzeichneten Extruder erreicht. In den Unteransprüchen sind vorteilhafte Ausgestaltungen der Erfindung wiedergegeben.

Erfindungsgemäß weist der Extruder wenigstens ein Schneckenelement auf, das mit mehreren Ringabschnitten versehen ist, die konzentrisch oder koaxial zur Schneckenwelle im Abstand voneinander angeordnet und durch Eindrehungen in das Schneckenelement gebildet sind.

Durch die Schneckenabschnitte des Schneckenelementes zwischen den Ringabschnitten gemäß dem kennzeichnenden Teil des Anspuchs 1, wird zunächst ein Druck aufgebaut, durch den dann der Stoff unter Scherwirkung und Dehnung durch den Ringspalt zwischen Extrudergehäuse und den Ringabschnitten gedrückt und der Druck wieder abgebaut wird. Durch die wiederkehrende Folge: Scherspaltpassage, Druckaufbau, Scherspaltpassage usw. an den Schneckenelementen erfolgt eine definierte Beanspruchung des Stoffes und damit eine gleichmäßige Beanspruchung, ohne den Stoff oder die Schnecke übermäßig zu beanspruchen.

Der Ring- und/oder Scherspalt zwischen den Ringabschnitten und den konkaven Kreissegmenten des Extrudergehäuses kann eine unterschiedliche Höhe aufweisen, um entsprechend dem jeweiligen Stoff eine hinreichende Misch- und/oder Knetwirkung zu erzeugen. Der Ringabschnitt kann dazu gegebenenfalls lediglich dem Kerndurchmesser der Schneckenwelle entsprechen. Vorzugsweise weist der Ringspalt jedoch eine Höhe von 10 % bis 90 % der Gangtiefe der Schnecke auf. Besonders bevorzugt ist ein Durchmesser der Ringabschnitte, der etwa dem Achsabstand zweier benachbarter Wellen entspricht.

Bevor der Stoff bei der Passage über den Ring- oder Scherspalt beansprucht wird, muss er durch einen Schneckenabschnitt eine gewisse Förderstrecke transportiert werden, um den erforderlichen Druck aufzubauen. Dazu weisen die Schneckenabschnitte, die zwischen zwei benachbarten Ringabschnitten liegen, im allgemeinen eine Länge von mindestens 1/10, vorzugsweise mindestens 1/5 des Schneckendurchmessers auf. Die Ringabschnitte werden vorzugsweise durch Eindrehungen in das Schneckenelement gebildet. Die Eindrehungen weisen vorzugsweise eine Tiefe von beispielsweise 1/2 oder weniger der Gangtiefe auf. Der Winkel der Flanken der Eindrehungen kann beispielsweise 30 bis 90 Grad betragen. Vorzugsweise werden schräge Eindrehungen durchgeführt, insbesondere mit einem Winkel von etwa 60 Grad zur Wellenachse.

Durch Werkstoffabtrag am Schneckenkamm und Flanken kann das Schneckenelement mit weiteren Abschnitten versehen werden. So kann insbesondere ein im wesentlichen förderneutraler Mischabschnitt durch Werkstoffabtrag vorgesehen sein.

Damit wird erfindungsgemäß insbesondere für Mehrwellenextruder ein Schneckenelement zur Verfügung gestellt, mit dem die vielfältigsten Ansprüche der Verfahrenstechnik von einem definierten Längsmischen großer Volumina im Deziliterbereich bis zu einem intensiven und nachhaltigen Einwirken im Centi- bis Milliliterbereich erfüllt werden können.

Nach den Ringspalten kann sich der Schneckengang im gleichen Gangsteigungswinkel fortsetzen. D.h., die Schneckenabschnitte des Schneckenelementes können, abgesehen von den eingedrehten Unterbrechungen im Bereich der Ringabschnitte einen fortlaufenden Schneckengang bilden.

Durch die Ringabschnitte werden zusätzliche Dispergierflächen gewonnen. Eine wesentliche Dispergierflächenvergrößerung kann zudem dadurch erreicht werden, dass die Schneckenabschnitte zwischen den Ringabschnitten mit gleichem Drehsinn fortschreitend zueinander winkelversetzt angeordnet sind, beispielsweise mit einem Winkelversatz um den halben Gangwinkel. Durch die winkelversetzten Schneckenabschnitte werden treppenartig winkelversetzte Stirnflächen als zusätzliche Dispergierflächen gebildet.

Der erfindungsgemäße Extruder kann lediglich zwei Schneckenwellen aufweisen. Er kann jedoch auch mindestens drei in einem Hohlraum des Extrudergehäuses längs eines Kreises oder Kreisbogens mit gleichem Zentriwinkelabstand angeordnete Wellen aufweisen, wobei das Extrudergehäuse an der radial innen- und außenliegenden Seite des Hohlraumes mit zur Extruderachse parallelen konkaven Kreissegmenten versehen ist, an denen die Schneckenelemente dicht geführt sind, wie beispielsweise in EP-B-0788867 beschrieben. Mit den erfindungsgemäßen Schneckenelementen kann damit ein Stoffdurchtritt durch den Wellenkranz von einer Seite des Hohlraumes zur anderen erfolgen.

Nachstehend ist der erfindungsgemäße Extruder anhand der Zeichnung näher erläutert. Darin zeigen:
Figur 1 einen Querschnitt durch einen Zweiwellenextruder mit am ganzen Umfang dicht ineinander greifenden Schnecken-elementen;
Figur 2a bis 2c eine Seitenansicht, perspektivische Ansicht bzw. Ansicht des Stirnprofils einer ersten Ausführungsform des Schneckenelementes;
Figur 3a bis 3b eine Seitenansicht, perspektivische Ansicht bzw. Ansicht des Stirnprofils einer zweiten Ausführungsform des Schneckenelementes; und
Figur 4 eine perspektivische Ansicht einer dritten Ausführungsform des Schneckenelementes; und
Figur 5 eine perspektivische Ansicht einer vierten Ausführungsform des Schneckenelementes

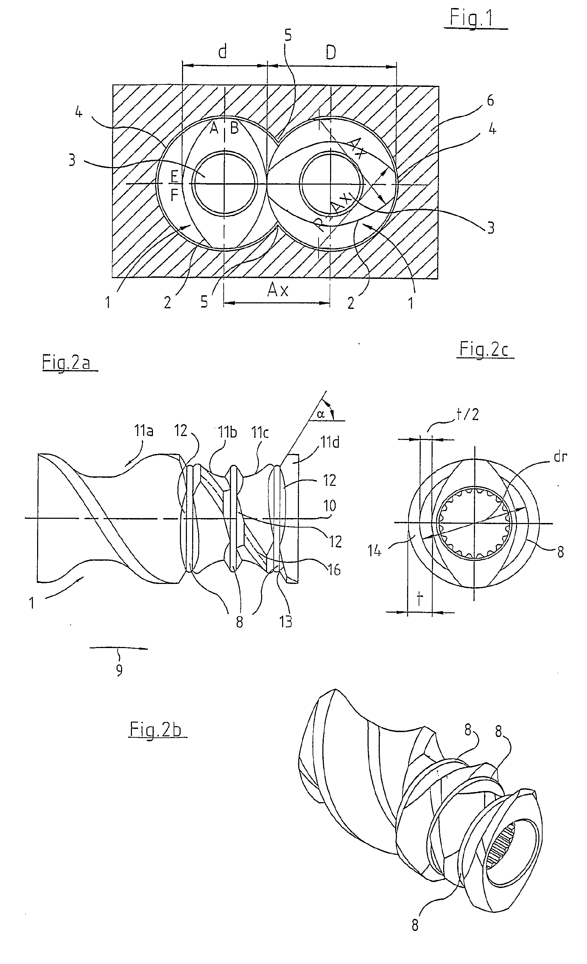

Gemäß Figur 1 weisen die Schneckenelemente 1 ein Stirnprofil 2 auf, das sich aus drei Kreisbögen A-B, E-F und A-E zusammensetzt. Der Kreisbogen A-B weist einen Durchmesser auf, der dem Schneckenaußendurchmesser D entspricht, der Kreisbogen E-F einen Durchmesser, der dem Schneckenkerndurchmesser d entspricht und der Kreisbogen A-E einen Durchmesser, dessen Radius dem Achsabstand Ax der beiden Schneckenelemente 1 entspricht (Vgl. EP-B-0002131).

Die ineinander greifenden Schneckenelemente 1 des Zweiwellenextruders sind verdrehsicher auf zwei parallele, gleichsinnig drehende Wellen 3 aufgesteckt, die zu den Schneckenwellen 3 parallelen Kreissegmenten 4 des Extrudergehäuses 6 geführt sind, sodass zwei Zwickel 5 gebildet werden.

Gemäß Figur 2a bis 2c weist das zweigängige Schneckenelement 1 drei zur Wellenachse 7 konzentrische und im Abstand angeordnete Ringabschnitt 8 auf.

Die Ringabschnitte 8 sind hier, bezogen auf die durch den Pfeil 9 dargestellte Förderrichtung, an der dem Auslass des Extruders zugewandten Seite des Schneckenelementes 1 vorgesehen, d.h., es ist in Förderrichtung 9 ein langer Schneckenabschnitt 11a vorgesehen, an den sich nach den ersten beiden Ringabschnitten 8 zwei kürzere Schneckenabschnitte 11b und 11c und nach dem dritten Ringabschnitt 8 ein noch kürzerer Schneckenabschnitt 11d anschließen.

Während der Schneckenabschnitt 11a etwa dem Schneckendurchmesser D entspricht, entspricht der Abstand der Ringabschnitte 8 voneinander etwa ein Drittel des Schneckendurchmessers und der Abstand der Stirnfläche des Schneckensegmentes 11 d vom benachbarten Ringabschnitt 8 lediglich etwa 1/6 D.

Die Ringabschnitte 8 werden durch Eindrehungen 12 in das Schneckenelement 1 erhalten. Der Winkel α der Flanken 13 der Eindrehungen 12 zur Wellenachse 10 beträgt etwa 60 Grad.

Die Höhe der Ringspalte 14 zwischen den Ringabschnitten 8 und dem Extrudergehäuse 6 beträgt nach Figur 2c etwa die Hälfte der Gangtiefe t, also der halben Differenz zwischen dem Kerndurchmesser d und dem Schneckenaußendurchmesser D (Figur 1). Der Durchmesser dr der Ringabschnitte 8 entspricht damit etwa dem Achsabstand Ax der Wellen 3 voneinander.

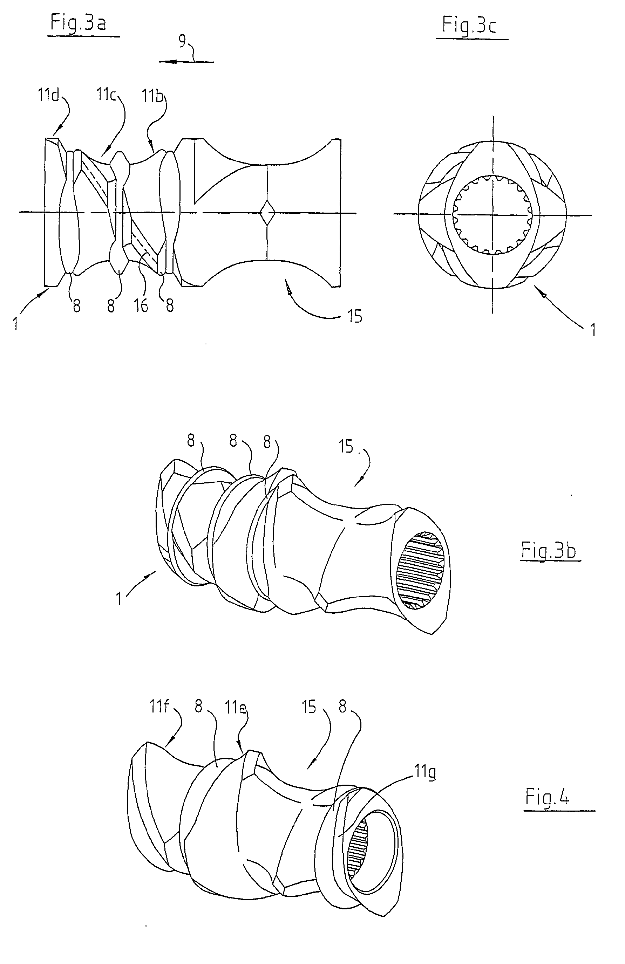

Das Schneckenelement 1 nach Figur 3a bis 3c unterscheidet sich von dem nach Figur 2a bis 2c im Wesentlichen dadurch, dass statt des Schneckenabschnittes 11a ein förderneutraler Abschnitt 15 vorgesehen ist, der durch einen entsprechenden Werkstoffabtrag des Schneckenkamms des Schneckenelementes 1 gebildet wird.

Das Schneckenelement 1 nach Figur 3a bis 3c ist insbesondere für einen Extruder geeignet, der drei und mehr in einem Hohlraum eines Extrudergehäuses längs eines Kreises oder Kreisbogens mit gleichem Zentriwinkelabstand angeordnete Schneckenelemente aufweist, die den Hohlraum in einen Innen- und Außenraum teilen. Wie erwähnt, muss bei derartigen Ringextrudern ein Materialausgleich zwischen dem Innen- und dem Außenrahmen erfolgen. Während die Ringabschnitte 8 und die kurzen Schneckenabschnitte 11b, c und d des Schneckenelementes nach Figur 3a bis 3c den Produktfluss hemmen, wird durch den Abschnitt 15 ein Durchlass von einem in den anderen Verfahrensraum ermöglicht.

Das Schneckenelement nach Figur 4 unterscheidet sich von dem nach Figur 3a bis 3c im Wesentlichen dadurch, dass nur zwei Ringabschnitte 8 vorgesehen sind, wobei der eine Ringabschnitt 8 zwischen der einen Stirnfläche des Schneckenelementes 1 und dem förderneutralen Abschnitt 15 angeordnet ist, und zwei durch den zweiten Ringabschnitt 8 getrennte Schneckenabschnitte 11e und f sowie ein weiterer Schneckenabschnitt 11g zwischen der Stirnfläche des Schneckenelementes 1 und dem Ringabschnitt 8 an dem Abschnitt 15 vorgesehen sind.

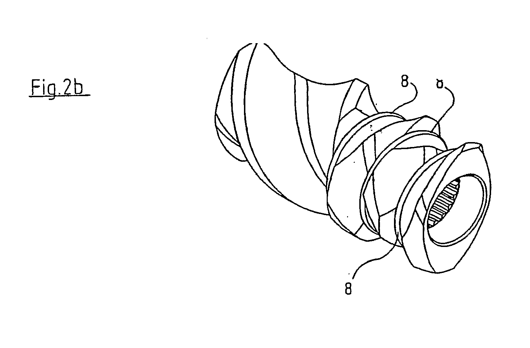

Bei dem Schneckenelement 1 nach Figur 2a bis 2c, Figur 3 a bis 3c und Figur 4 ist , wie in Figur 2 a durch die gestrichelte Linie 16 angedeutet, ein fortlaufender Schneckengang gebildet, der lediglich durch die Eindrehungen 12 mit den Ringabschnitten 8 unterbrochen wird.

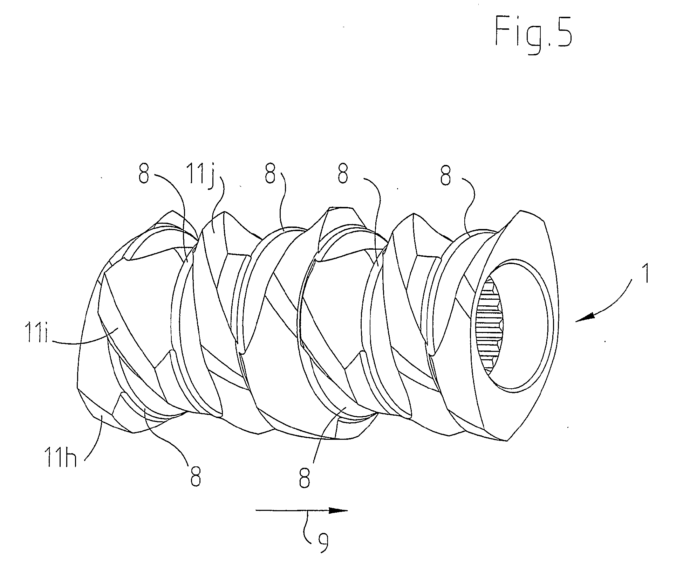

Demgegenüber sind bei der Ausführungsform nach Figur 5 die Schneckenabschnitte 11 h, i, j ... zwischen den Ringabschnitten 8 mit gleichem Drehsinn fortschreitend zueinander winkelversetzt angeordnet.

## Patentansprüche

1. Extruder zum kontinuierlichen Bearbeiten und/oder Verarbeiten von fliessfähigen Stoffen, mit weinigstens zwei parallelen, gleichsinnig drehenden Wellen (3), die mit ineinander greifenden Schneckenelementen bestückt sind, deren Stirnfläche durch Kreisbögen (A-B, E-F, A-E) begrenzt wird, die dem Schneckenaußendurchmesser (D), dem Schneckenkerndurchmesser (d) und maximal dem Achsabstand (Ax) der Schneckenelemente entsprechen und die an zu den Wellen parallelen Kreissegmenten (4) des Extrudergehäuses (6) geführt sind, **dadurch gekennzeichnet, dass** zumindest ein Schneckenelement (1) mehrere im Abstand angeordnete konzentrische Ringabschnitte (8) mit Schnecken abschnitten (11b, 11c, 11i, 11j ...) zwischen den Ringabschnitten (8) aufweist, wobei die Ringabschnitte (8) durch Eindrehungen (12) in das Schneckenelement (1) gebildet sind.

2. Extruder nach Anspruch 1, **dadurch gekennzeichnet, dass** der axiale Abstand der Ringabschnitte (8) des Schneckenelementes (1) nicht größer als der Schneckenaußendurchmesser (D) ist.

3. Extruder nach Anspruch 1 oder 2, **dadurch gekennzeichnet, dass** der axiale Abstand der Ringabschnitte (8) des Schneckenelementes (1) mindestens 1/10 der Schneckendurchmesser (D)beträgt.

4. Extruder nach einem der vorstehenden Ansprüche, **dadurch gekennzeichnet, dass** die Höhe (h) des Ringspaltes (14) zwischen den Ringabschnitten (8) und den Kreissegmenten (4) des Extrudergehäuses (6) ein Viertel bis drei Viertel der Gangtiefe (t) entspricht.

5. Extruder nach einem der vorstehenden Ansprüche, **dadurch gekennzeichnet, dass** der Durchmesser (d) der Ringabschnitte (8) etwa dem Achsabstand (Ax) der Wellen (3) entspricht.

6. Extruder nach einem der vorstehenden Ansprüche, **dadurch gekennzeichnet, dass** die Flanken (13) der Ringabschnitte (8) schräg zur Wellenachse (7) verlaufen.

7. Extruder nach einem der vorstehenden Ansprüche, **dadurch gekennzeichnet, dass** die Schneckenabschnitte (11 h, i, j ...) zwischen den Ringabschnitten (8) mit gleichem Drehsinn fortschreitend zueinander winkelversetzt angeordnet sind.

8. Extruder nach einem der Ansprüche 1 bis 6, **dadurch gekennzeichnet, dass** die Schneckenabschnitte (11a, b, c ...) des Schneckenelementes (1), abgesehen von der Unterbrechung im Bereich der Ringabschnitte (8), einen fortlaufenden Schneckengang (16) bilden.

9. Einrichtung nach einem der vorstehenden Ansprüche, **dadurch gekennzeichnet, dass** das Schneckenelement (1) zusätzlich wenigstens einen förderneutralen Abschnitt (15) aufweist.

## Claims

1. An extruder for the continuous treatment and/or processing of free-flowing substances with at least two parallel shafts (3) rotating in the same direction which are fitted with intermeshing screw elements the end faces of which are delimited by circular arcs (A-B, E-F, A-E) which correspond to the outer diameter (D) of the screw, to the core diameter (d) of the screw and, at most, to the axial distance (Ax) of the screw elements, and which are guided on circular segments (4) of the extruder housing (6) which are parallel to the shafts, **characterized in that** at least one screw element (1) has a plurality of interspaced concentric annular sections (8) having screw sections (11b, 11c, 11i, 11j ...) between the annular sections (8), wherein the annular sections (8) are formed by turned grooves (12) in the screw element (1).

2. An extruder according to claim 1, **characterized in that** the axial distance of the annular sections (8) of the screw element (1) is not larger than the outer diameter (D) of the screw.

3. An extruder according to claim 1 or 2, **characterized in that** the axial distance of the annular sections (8) of the screw element (1) is at least 1/10 of the screw diameter (D).

4. An extruder according to any of the preceding claims, **characterized in that** the height (h) of the annular gap (14) between the annular sections (8) and the circular segments (4) of the extruder housing (6) corresponds to one fourth to three fourths of the flight depth (t).

5. An extruder according to any of the preceding claims, **characterized in that** the diameter (d) of the annular sections (8) corresponds approximately to the axial distance (Ax) of the shafts (3).

6. An extruder according to any of the preceding claims, **characterized in that** the flanks (13) of the annular sections (8) run at an angle to the shaft axis (7).

7. An extruder according to any of the preceding claims, **characterized in that** the screw sections (11h, i, j ...) between the annular sections (8) are arranged progressively and offset to each other at an angle in the same rotational direction.

8. An extruder according to any of claims 1 to 6, **characterized in that**, except for the interruption in the area of the annular sections (8), the screw sections (11a, b, c ...) of the screw element (1) form a continuous screw flight (16).

9. A device according to any of the preceding claims, **characterized in that** the screw element (1) has in addition at least one feed-neutral section (15).

## Revendications

1. Extrudeuse permettant un travail et/ou un traitement continu(s) de substances coulantes, comportant au moins deux arbres (3) parallèles tournant dans le même sens qui sont pourvus d'éléments de vis sans fin qui s'engrènent les uns dans les autres, dont la face frontale est limitée par des arcs de cercle (A-B, E-F, A-E) qui correspondent au diamètre extérieur (D) de la vis sans fin, au diamètre central (d) de la vis sans fin et au maximum à l'écart axial (Ax) des éléments de vis sans fin et qui sont guidés sur des segments de cercle du boîtier (6) de l'extrudeuse, qui sont parallèles aux arbres, **caractérisée en ce qu'**au moins un élément de vis sans fin (1) présente plusieurs tronçons annulaires (8) concentriques agencés avec écart, avec des tronçons de vis sans fin (11 b, 11 c, 11i, i, 11j...) entre les tronçons annulaires (8), les tronçons annulaires (8) étant formes par des gorges (12) tournées dans la masse de la vis sans fin (1).

2. Extrudeuse selon la revendication 1, **caractérisée en ce que** l'écart axial des tronçons annulaires (8) de l'élément de vis sans fin (1) n'est pas supérieur au diamètre extérieur (D) de la vis sans fin.

3. Extrudeuse selon la revendication 1 ou 2, **caractérisée en ce que** l'écart axial des tronçons annulaires (8) de l'élément de vis sans fin (1) est d'au moins 1/10 du diamètre (D) de la vis sans fin.

4. Extrudeuse selon l'une des revendications précédentes, **caractérisée en ce que** la hauteur (h) de la fente annulaire (14) entre les tronçons annulaires (8) et les segments de cercle (4) du boîtier (6) de l'extrudeuse correspond à un quart jusqu'à trois quarts de la profondeur (t) du pas de vis.

5. Extrudeuse selon l'une des revendications précédentes, **caractérisée en ce que** le diamètre (d) des tronçons annulaires (8) correspond approximativement à l'écart axial (Ax) des arbres (3).

6. Extrudeuse selon l'une des revendications précédentes, **caractérisée en ce que** les flancs (13) des tronçons annulaires (8) s'étendent en oblique par rapport à l'axe d'arbre (7).

7. Extrudeuse selon l'une des revendications précédentes, **caractérisée en ce que** les tronçons de vis sans fin (11h, i, j ...) entre les tronçons annulaires (8) sont agencés avec le même sens de rotation en étant déplacés angulairement les uns par rapport aux autres de manière progressive.

8. Extrudeuse selon l'une des revendications 1 à 6, **caractérisée en ce que** les tronçons de vis sans fin (11 a, b, c ...) de l'élément de vis sans fin (1) forment un pas de vis (16) continu, à l'exception de l'interruption dans la zone des tronçons annulaires (8).

9. Dispositif selon l'une des revendications précédentes, **caractérisé en ce que** l'élément de vis sans fin (1) présente additionnellement au moins un tronçon neutre du point de vue transport (15).
